# EUROPÄISCHE PATENTANMELDUNG

(11) **EP 1 291 784 A1**
(43) Veröffentlichungstag der Anmeldung: **12.03.2003**
(21) Anmeldenummer: 01810869.6
(22) Anmeldetag: 10.09.2001
(51) Int. Cl.: G06F 17/30

(54) **Herstellung einer selektiven Kommunikationsverbindung**

(71) Anmelder: ABB RESEARCH LTD., 8050 Zürich (CH)
(72) Erfinder: Kirrmann, Hubert, 5405 Baden (CH)
(74) Vertreter: ABB Patent Attorneys

(57) **Zusammenfassung**

Die Erfindung bezieht sich auf ein Verfahren und ein System zur Herstellung eines selektiven, nicht-leitungsgebundenen Kommunikationsaufbaus bzw. eines ungerichteten Kommunikationskanals zwischen einem auszuwählenden Gerät (10) aus einer Vielzahl von räumlich benachbart angeordneten, weiteren Geräten (10₁, 10₂, 10₃) und einer Partnereinrichtung (12). Dazu wird ein Lasersignal (14) von der Partnereinrichtung (12) an das Gerät (10) gesendet, das daraufhin seinen Status ändert und ein Identifikationssignal (25,25') an die Partnereinrichtung (12) sendet. Nach dessen Empfang wird ein ungerichteter Kommunikationskanal (34) mit dem ausgewählten Gerät (10) hergestellt.

## Beschreibung

### Technisches Gebiet

Die Erfindung betrifft ein System, ein Verfahren, ein Gerät und eine Partnereinrichtung zur Herstellung einer selektiven Kommunikationsverbindung zwischen einem Gerät unter einer Vielzahl von Geräten und einer Partnereinrichtung.

Die Erfindung betrifft insbesondere die gezielte Auswahl eines anzusprechenden Gerätes aus einer Vielzahl von Geräten, um daraufhin eine gerätespezifische Kommunikationsverbindung zu dem ausgewählten Gerät aufbauen zu können.

### Stand der Technik

Bei technischen Anlagen, die eine Vielzahl von einzelnen, peripheren Geräten umfassen, ist es notwendig, diese Geräte von einer oder mehreren Partnereinrichtungen aus ansprechen zu können, um mit diesen zu kommunizieren. Die Partnereinrichtung kann dabei ein von einer Person getragenes Service- oder Bediengerät sein.

Die einzelnen Geräte können dabei Leittechnikgeräte, Sensoren oder Aktoren sein, die die erfaßten Daten, Zustands- oder Prozessinformationen an das Service- oder Bediengerät weiterleiten. Doch häufig ist es auch notwendig, Daten an entfernt befindliche Geräte zu senden, um diese beispielsweise zu eichen. Die Geräte sind im allgemeinen nicht mit der oder den Partnereinrichtungen verdrahtet, um einen mobilen Einsatz zu ermöglichen. Deshalb wird für die Kommunikation auf eine ungerichtete, drahlose Kommunikation, z.B. Funkstandards, zurückgegriffen, wie beispielsweise Bluetooth oder Infrarot Standards, um die Nachteile einer fest verdrahteten Übertragungstechnik, die bisher vornehmlich auf dem sogenannten HART Protokoll (Highway Addresssable Remote Transducer) basierten, zu überwinden.

Sind bei einer Prozeßsteuerungsanlage z.B. Meßumformer bzw. Transducer im Einsatz, müssen diese von einer Partnereinrichtung kalibriert werden. Da aber häufig mehrere Geräte, hier Messumformer, eng benachbart in einer Anlage angeordnet sind, ist es nicht möglich mit ungerichteten Signalgebungsverfahren, wie die nach dem Funkstandard, gezielt und spezifisch ein bestimmtes Gerät anzusprechen, ohne mit den räumlich benachbarten Geräte zu kommunizieren.

Deshalb hat man bisher auf Verfahren zurückgegriffen, um vor dem Kommunikationsaufbau einer drahtlosen Verbindung manuell ein bestimmtes Gerät auswählen zu können, zu dem die Verbindung aufgebaut werden soll.

Dies wurde dadurch erreicht, indem ein Schalter betätigt wurde, der an jedem Gerät vorgesehen war. Dies ist allerdings ein sehr fehleranfälliges, zeitintensives und teilweise problematisches Vorgehen, da die Geräte häufig nur sehr schwer zugänglich sind und ein zusätzlicher Arbeitsschritt notwendig ist.

Eine andere Methode basiert auf der Fähigkeit von Bluetooth-Geräten, andere Geräte in der Umgebung zu erkennen, und dem Benutzer eine Auswahl vorzustellen, wobei die Geräte der Reihe nach selektiert werden können. Diese Methode versagt aber, falls eine große Menge von identischen Geräten vorgestellt wird.

Greift man bei der Kommunikationsverbindung auf den Bluetooth Standard zurück, dann ergibt sich weiterhin folgendes Problem:
Bluetooth Netzwerke erfordern eine Vorkonfigurierung für das Gerät, mit dem die Verbindung aufgebaut werden soll. Deshalb muß der Anwender an dieser Stelle eine eineindeutige Adresse oder Identifikationsnummer des ausgewählten Gerätes eingeben. Dieser Vorgang ist sehr fehleranfällig, da bereits eine Abweichung in nur einer Stelle der Adresse ein völlig anderes Gerät anspricht.

Im Rahmen der Gerätekommunikation zeigt die US 5 960 214 ein System zum Management von einer Vielzahl von entfernt von einer Basisstation eingesetzten Geräten, beispielsweise Prozeßsteuerungsgeräten oder Meßsensoren, die lediglich eine drahtlose Verbindung zur der Basisstation aufweisen. Hier erhält der Fachmann allerdings keinen Hinweis darauf, das jeweilige Gerät unter einer Vielzahl von Geräten eineindeutig, durch den Einsatz eines optischen Signals identifizieren zu können.

Weiterhin zeigt die US 6 174 169 ein laserbasiertes Identifikationssystem, das eine Laserstrahlsendeeinheit und eine Laserstrahlempfangseinheit umfaßt, wobei letztere den Laserstrahl in ein elektrisches Signal umwandelt und einer Verarbeitungseinheit zuführt. Diese Schrift bezieht sich insbesondere auf militärische Identifikationssysteme, die mit Lasereinrichtungen betrieben werden. Eine optische Signalübertragung durch einen Laserstrahl zur Identifikation von Geräten innerhalb einer Gruppe von dicht nebeneinander angeordneten Geräten ist hier nicht offenbart.

### Darstellung der Erfindung

Aufgabe der vorliegenden Erfindung ist es deshalb, ein fehlerunanfälliges, schnelles Verfahren und ein kostengünstiges System zur Verfügung zu stellen, das einen gezielten, selektiven Kommunikationsaufbau mit einem Gerät aus einer Vielzahl von Geräten ermöglicht und das vorzugsweise automatisch abläuft.

Diese Aufgabe wird erfindungsgemäß durch ein Verfahren, ein System, ein Gerät und eine Partnereinrichtung gemäss den unabhängigen Patentansprüchen gelöst.

Im erfindungsgemässen Verfahren wird ein Gerätestatus verwendet, der vorzugsweise binär ausgelegt ist und anzeigt, ob ein Gerät ausgewählt worden ist. Das Verfahren weist die nachstehenden Schritte auf:
- Auswahl des Gerätes durch:
   -- Senden eines gerichteten Signals auf einen ersten Empfänger des Gerätes
   -- Empfangen des gerichteten Signals an dem Gerät und
   -- automatisches Ändern des Status des Gerätes
- Kommunikationsaufbau zwischen dem statusveränderten Gerät und der Partnereinrichtung.

Weiterhin wird diese Aufgabe durch ein System der eingangs genannten Art gelöst, mit:
- einer Auswahleinrichtung, die zumindest einen ersten Sender und einen ersten Empfänger umfaßt, der an dem Gerät angeordnet ist und der zum Empfang der Signale des ersten Senders bestimmt ist und
- einer Kommunikationseinrichtung, welche mit der Auswahleinrichtung zusammenarbeitet und welche einen Kommunikationskanal zwischen dem mit der Auswahleinrichtung ausgewählten Gerät und der Partnereinrichtung aufbaut und abwickelt.

Vorzugsweise weist die Partnereinrichtung zumindest einen ersten Sender auf und das System umfaßt einen ersten Empfänger, der an jedem Gerät angeordnet ist.

Die Erfindung basiert grundsätzlich auf einer automatischen Statusänderung des Gerätes, die in Abhängigkeit davon durchgeführt wird, ob das Gerät insbesondere von der Partnereinrichtung angesprochen bzw. ausgewählt worden ist. Falls ja, wird eine Statusänderung durchgeführt. Der Status bzw. dessen Änderung ist auch zu einem späteren Zeitpunkt von der Partnereinrichtung abrufbar. In Abhängigkeit von dem Status wird dann das Gerät als ausgewähltes Gerät oder als nicht-ausgewähltes Gerät klassifiziert, so daß aufgrund der Klassifikation ein Kommunikationsaufbau erfolgt.

Um nach einem begonnenen Kommunikationsaufbau das Verfahren nochmals erneut starten zu können (und beispielsweise das Gerät nochmals auszuwählen) wird sinnvollerweise nach dem Kommunikationsaufbau oder nach einem sich daran mittelbar oder unmittelbar anschließenden Kommunikationsabbau eine Statusänderung durchgeführt. Diese Rückführung des Status in den initialen Zustand ist entweder gezielt, nur für bestimmte Geräte möglich oder erfaßt grundsätzlich alle Geräte.

Diese Rückführung kann durch den Kommunikationskanal erfolgen, oder durch Ausbleiben der Kommunikation über diesen Kommunikationskanal während einer bestimmten (vorbestimmten) Time-Out-Zeit. Die Rückführung kann auch dadurch erfolgen, daß das Selektionssignal ein zweites Mal nach bereits erfolgter Selektion gesendet wird.

In der bevorzugten Ausführungsform der Erfindung weist die Auswahleinrichtung zusätzlich zumindest einen zweiten Sender, der an dem Gerät angeordnet ist und einen zweiten Empfänger auf, welcher bei der Partnereinrichtung angeordnet ist und welcher zum Empfang der Signale des zweiten Senders bestimmt ist. Damit wird eine erste Überprüfungsmöglichkeit für die Selektion des Gerätes geschaffen, indem ein Identifikationssignal von dem angesprochenen Gerät an die Partnereinrichtung gesendet wird und dort weiteren Verarbeitungsschritten unterzogen wird. Das Identifikationssignal ist vorteilhafterweise gerätespezifisch, und erlaubt einen eineindeutigen Rückschluß auf das sendende Gerät.

Es ist jedoch auch möglich, die Auswahleinrichtung nicht mit den eben erwähnten zusätzlichen Bauteilen auszustatten. Dann wird die Kommunikationsverbindung unmittelbar und ohne Verifikationsmöglichkeit aufgebaut, sobald das oder die Signale des ersten Senders an dem Gerät empfangen wurden. Das Gerät bestätigt seine Selektion durch Aufbau der Kommunikationsverbindung über den Kommunikationskanal.

Üblicherweise ist das Gerät und/oder die Partnereinrichtung ein mobiles, elektronisches Gerät, insbesondere ein tragbarer Computer, oder ein PDA (Personal Digital Assistant) oder ein Mobiltelefon, das/der durch einen ungerichteten Kommunikationskanal mit anderen Geräten verbunden ist.

Darüber hinaus kann das Gerät an den Benutzer der Partnereinrichtung eine visuelle Bestätigung seiner Selektion senden, insbesondere unter Ausnutzung des zweiten Senders, beispielsweise durch eine Leuchtdiode, die im sichtbaren Bereich angeordnet ist.

Vorteilhafterweise kann das Verfahren auch dazu verwendet werden, Geräte zu konfigurieren oder Daten an diese zu übermitteln, die an einen Bus (LON, Profibus) angeschlossen sind.

Kennzeichnend für eine vorteilhafte Ausführungsform des Verfahrens ist, daß die Auswahl des peripheren Gerätes gerätespezifisch ist und eine eineindeutige Identifikation des in einer Gruppe von mehreren Geräten integrierten Gerätes umfaßt. Dieser Selektionsvorgang findet vorteilhafterweise automatisch statt und wird vorzugsweise in der Partnereinrichtung ausgeführt. Das heißt, daß der Prozeß bis zu einem vollständigen Aufbau einer Kommunikationsverbindung zwischen der Partnereinrichtung und einem bestimmten Gerät automatisch abläuft. In dieser Ausführungsform antwortet das ausgewählte Gerät auf das gerichtete Signal, das an das ausgewählte Gerät gesendet wird mit einem gerätespezifischen Identifikationssignal, das wiederum von der Station empfangen wird, die das gerichtete Signal gesendet hat.

Üblicherweise wird das gerichtete Signal von der Partnereinrichtung gesendet, so daß der erste Sender und/oder der zweite Empfänger an der Partnereinrichtung angeordnet ist. Es kann jedoch in einer alternativen Ausführungsform auch möglich sein, daß - im Rahmen des Selektionsvorganges - nicht die Partnereinrichtung selbst die entsprechenden Signale sendet und empfängt, sondern eine ihr zugeordnete Einheit. Dann sind der erste Sender und/oder der zweite Empfänger nicht unmittelbar an der Partnereinrichtung angeordnet.

Das Identifikationssignal wird üblicherweise über den ungerichteten Kommunikationskanal gesendet. Alternativ kann es jedoch auch über eine weitere Kommunikationsverbindung gesendet werden, insbesondere als optisches Signal und/oder als Funksignal.

In der bevorzugten Ausführungsform umfaßt das Verfahren vor dem Kommunikationsaufbau eine Überprüfung des Auswahlvorganges, indem das Identifikationssignal mit einem zweiten Identifikationsschlüssel auf Übereinstimmung verglichen wird. Eine weitere Überprüfungsmöglichkeit liegt darin, das gerichtete Signal so zu modulieren, daß nach Empfang des gerichteten Signals eine Identifikation der Partnereinrichtung möglich ist, indem das Gerät durch die Analyse des Signals beispielsweise Nutzungsrechte der Partnereinrichtung verifizieren kann.

Dies eröffnet eine zusätzliche Überprüfungs- und Verarbeitungsmöglichkeit für die erfindungsgemäße Selektion des anzusprechenden Gerätes. Damit kann sichergestellt werden, daß der Kommunikationsaufbau nur zwischen demjenigen Gerät und der Partnereinrichtung erfolgt, das auf den Empfang des gerichteten Signals das Identifikationssignal gesendet hat. Würde in einem Fehlerfall beispielsweise ein anderes nicht angesprochenes bzw. nicht ausgewähltes Gerät fälschlicherweise ein Identifikationssignal senden, dann kann durch den Vergleich mit dem zweiten Identifikationsschlüssel sofort festgestellt werden, daß der gewünschte Empfänger des gerichteten Signals nicht mit dem Sender des Identifikationssignals übereinstimmt. Die zugehörigen Werte bzw. Datensätze sind erfindungsgemäß in einer vorteilhaften Ausführungsform in einer Datenstruktur abgelegt und abrufbar.

Der ungerichtete Kommunikationskanal ist vorteilhafterweise bidirektional, so daß Daten von und zu dem Gerät übertragen werden können und ein schreibender und/oder lesender Zugriff auf Informationen von dem bzw. für das Gerät besteht.

Durch die spezifische Auswahl eines Gerätes oder einer Gruppe von Geräten aus einer Vielzahl von Geräten und deren Statusänderung ist es möglich, daß die Kommunikationsverbindung selbst nicht gerichtet ist, da nur die Geräte empfangsbereit sind, die einen geänderten Status aufweisen.

Aus Gründen der Vereinfachung wird das gerichtete Signal nur solange gesendet, bis das Gerät das Identifikationssignal gesendet hat und/oder bis der Selektionsvorgang vollständig abgeschlossen ist, das heißt insbesondere, bis die Partnereinrichtung die Überprüfung der Auswahl abgeschlossen hat. Alternativ ist es jedoch auch möglich, das gerichtete Signal solange weiter zu senden bis der Kommunikationsaufbau wieder abgebrochen wird. Damit können das Sender/Empfängerpaar des gerichteten Signals zusammen mit dem Sender/Empfängerpaar des Identifikationssignals auch als Kommunikationskanal zwischen Partnereinrichtung und Gerät dienen.

Als sehr vorteilhaft erweist es sich, daß das Verfahren, insbesondere die Auswahl des Gerätes, automatisch abläuft, indem (geräte-)spezifische Signale gesendet und empfangen werden. Eine manuelle Manipulation bei dem Gerät, wie beispielsweise das Bedienen eines Schalters ist erfindungsgemäß nicht mehr erforderlich. Denn die Datenübertragung für die Auswahl des Gerätes ist gerichtet, das heißt, daß vom Sender ein spezifischer Empfänger (hier ein bestimmtes Gerät) auswählbar ist bzw. ausgewählt werden muß - im Unterschied zu dem bisherigen Vorgehen, bei dem die Datenübertragung ungerichtet war und ein Sender grundsätzlich alle erreichbaren Empfänger angesprochen hat und die Auswahl über einen weiteren Mechanismus erfolgen mußte. Dieser zusätzliche Verfahrensschritt ist nun vorteilhafterweise nicht mehr notwendig.

Gemäß der Erfindung basiert der Verfahrensschritt der Auswahl und der Verfahrensschritt des Kommunikationsaufbaus auf unterschiedlichen Übertragungsprotokollen, wobei die Auswahl auf einer gerichteten, gerätespezifischen Signalübertragung basiert. Hier sind beispielsweise Laser-, Richtfunk- oder Satelliten-Direktfunk-Systeme einsetzbar. Hauptsächlich wird das Verfahren so eingesetzt, daß der erste Sender zum Senden von gerichteten, gerätespezifischen Signalen bestimmt ist und in der bevorzugten Ausführungsform Lasersignale sendet.

Der erste Sender ist vorzugsweise ein Laserpointer.

Das Gerät, das über den Laserpointer selektiert wird, sendet in dieser Ausführungsform ein Identifikationssignal als Antwortsignal zurück. Dieses Identifikationssignal, das ungerichtet, ein optisches Signal (z.B. ein Blinksignal) oder ein Funksignal sein kann, wird dann von der Partnereinrichtung empfangen und verarbeitet. In einer bevorzugten Ausführungsform der Erfindung liegt das optische Signal im sichtbaren Bereich und wird beispielsweise durch eine leuchtende oder blinkende Anzeigelampe oder LED gesendet. Dies erlaubt eine Kontrolle der Identität des ausgewählten Gerätes durch einen Bediener. Darauf wird in dieser Ausführungsform der Erfindung der Kommunikationsaufbau über den ungerichteten Kommunikationskanal nach Massgabe einer Benutzeringabe an die Kommunikationseinrichtung ausgelöst.

Bei dem gerichteten Signal kann es sich in einer einfachen Form um die Übertragung von einer binären Information entsprechend einem Informationsbit handeln (Signal während einer bestimmten Zeit empfangen bzw. nicht empfangen).

In einer alternativen Ausführungsform der Erfindung wird das optische Signal, insbesondere der Laserstrahl so moduliert, daß er gleichzeitig zur Übertragung von mehr als nur einem Informationsbit bestimmt ist. Dann wird das optische Signal für zwei Funktionen verwendet: einerseits für den Auswahlvorgang und andererseits für den Kommunikationsaufbau bzw. die Kommunikation zwischen dem Gerät und der Partnereinrichtung. Dies betrifft insbesondere Authentifizierungsprozesse, die das Gerät anhand der übertragenen Informationen für die jeweilige Partnereinrichtung ausführen kann.

Als sehr vorteilhaft hinsichtlich der Flexibilität des erfindingsgemäßen Verfahrens erweist es sich, daß der Verbindungsaufbau einerseits seitens des Gerätes und andererseits seitens der Partnereinrichtung möglich ist. Die Initiative für die Steuerung des Verbindungsaufbaus und dessen Abwicklung kann also von beiden Geräten ausgehen.

### Kurze Beschreibung der Zeichnungen

Weitere Vorteile, Merkmale und alternative Ausführungsformen der Erfindung ergeben sich aus der nachfolgenden detaillierten Figurenbeschreibung, die in Zusammenhang mit der Zeichnung zu lesen ist, in der:
Fig. 1 eine schematische Darstellung von Elementen eines erfindungsgemäßen Systems,
Fig. 2 ein Ablaufdiagramm nach einer bevorzugten Ausführungsform der Erfindung und
Fig. 3 eine Übersichtsdarstellung der Erfindung ist.

### Wege zur Ausführung der Erfindung

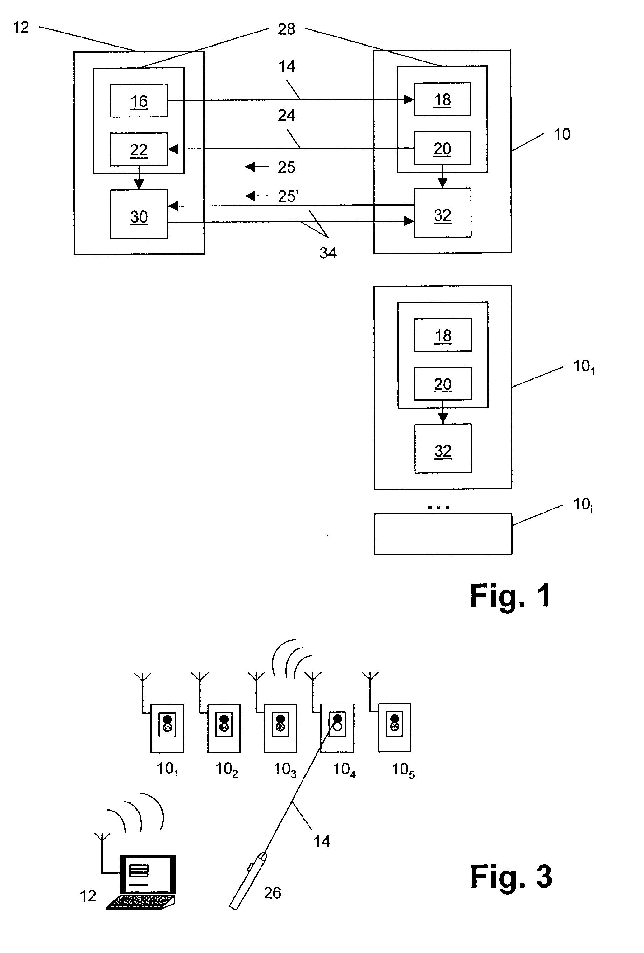

Wie in Figur 1 gezeigt, ist ein Gerät 10 in einer Gruppe von weiteren Geräten 10₁, 10₂, 10₃,....integriert. Die Bezugsziffern 10ᵢ sollen andeuten, daß es sich um beliebig viele Geräte handeln kann und diese sollen nicht auf die Anzahl von drei beschränkt verstanden sein.

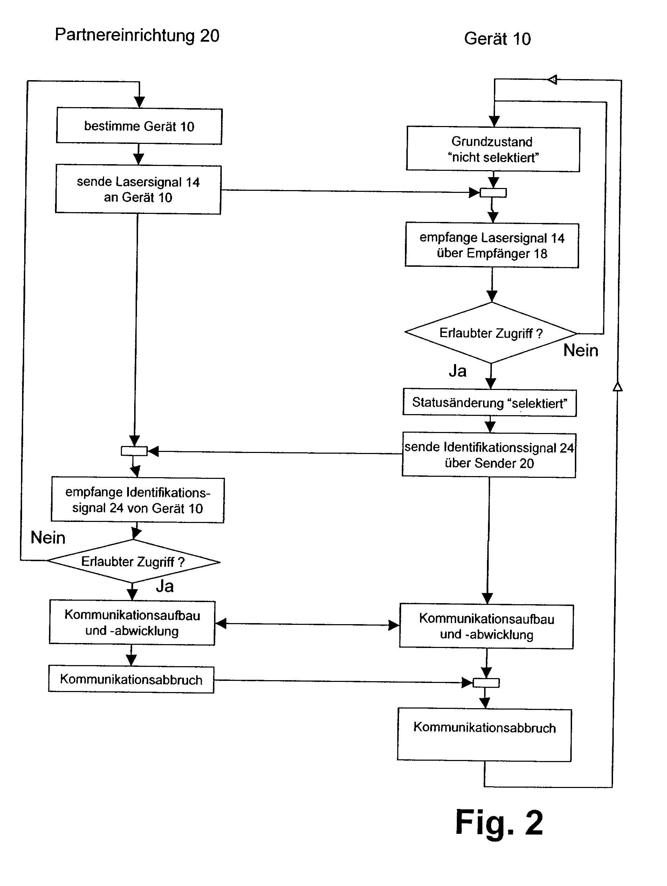

Im folgende soll unter Bezugnahme auf Figur 2 der allgemeine Ablauf gemäß einer bevorzugten Realisierung des erfindungsgemäßen Verfahrens erläutert werden:

Eine im allgemeinen mit 12 bezeichnete Partnereinrichtung soll eine Kommunikationsverbindung zu einem speziellen Gerät 10 aufbauen. Dazu muß die Partnereinrichtung 12 das anzusprechende Gerät 10 aus der Menge der weiteren Geräte 10₁, 10₂, 10₃,....selektieren bzw. eindeutig bestimmen. Um diesen Selektionsprozeß - der in Figur 2 durch die oberen fünf Prozesse angedeutet ist - ausführen zu können, sendet ein erster Sender 16 der Partnereinrichtung 12 oder einer ihr zuordnungsfähigen Einrichtung ein optisches Signal, insbesondere einen Laserstrahl 14 an das Gerät 10. Ein erster Empfänger 18 des Gerätes 10 empfängt den Laserstrahl 14 und veranlaßt daraufhin, daß ein Gerätestatus geändert wird. Der Gerätestatus ist eine binäre Variable, die zwei Zustände anzeigt:1. "das Gerät ist nicht ausgewählt" und 2."das Gerät wurde ausgewählt". Nur wenn sich ein Gerät 10 in dem zweiten Zustand befindet, wird erfindungsgemäß ein Verbindungsaufbau mit ihm durchgeführt.

Sinnvollerweise findet auch eine Authentifizierung des sendenden Gerätes (hier der Partnereinrichtung 12) statt. Wird beispielsweise von einer solchen Partnereinrichtung 12 ein erstes Signal 14 gesendet, die nicht zum Zugriff auf das Gerät 10 berechtigt ist, wird kein Verbindungsaufbau eingeleitet.

Damit der Auswahlvorgang auch in umgekehrter Richtung einer Überprüfung unterzogen werden kann, sendet das Gerät 10 ein Identifikationssignal 25,25'. Das Identifikationssignal 25,25' ist vorzugsweise ein optisches Signal, z.B. ein Blinksignal. Es kann aber auch ein Funksignal sein oder auf einem anderen Protokoll zur kabellosen Datenübertragung basieren. Hier werden Fehlerfälle ausgeschaltet, die daraus resultieren, daß ein nicht angesprochenes Gerät 10 fälschlicherweise Signale an die Partnereinrichtung 12 sendet.

In einer ersten bevorzugten Ausführungsform der Erfindung wird das Identifikationsignal 25 durch einen zweiter Sender 20 des Gerätes 10 über eine weitere Kommunikationsverbindung 24 an an einen zweiten Empfänger 22 der Partnereinrichtung 12 oder an einen Benutzer übertragen. Empfängt der zweite Empfänger das Identifikationssignal 25 und entspricht dieses einem zweiten Identifikationsschlüssel, so wird automatisch eine Kommunikationsaufnahme durch eine Kommunikationseinrichtung 30 der Partnereinrichtung 12 mit einer weiteren Kommunikationseinrichtung 32 des Gerätes 10 über einen ungerichteten Kommunikationskanal 34 ausgelöst. Vorzugsweise erfolgt eine akustische Rückmeldung an einen Benutzer, beispielsweise durch einen Piepston, um die Übereinstimmung des Identifikationssignals 25 mit dem zweiten Identifikationsschlüssel anzuzeigen. In diesem Fall kann alternativ zur automatischen Kommunikationsaufnahme die Kommunikationsaufnahme durch die Kommunikationseinrichtung 30 durch eine Benutzereingabe ausgelöst werden. In einer weiteren Alternative des erfindungsgemässen Verfahrens wird das Identifikationssignal, beispielsweise eine blinkende LED am Gerät 10, durch den Benutzer registriert und als vom gewünschten Gerät 10 stammend beurteilt. Darauf geschieht die Kommunikationsaufnahme ebenfalls aufgrund einer Benutzereingabe an die Kommunikationseinrichtung 30.

In einer zweiten bevorzugten Ausführungsform der Erfindung wird das Identifikationsignal 25' durch die weitere Kommunikationseinrichtung 32 über den ungerichteten Kommunikationskanal 34 an die Kommunikationseinrichtung 30 übertragen. Auch in dieser Ausführungsform wird nach einer Überprüfung des Identifikationsignals 25', die Partnereinrichtung 12 die Kommunikationsverbindung über den ungerichteten Kommunikationskanal 34 zu dem das Identifikationssignal 25 sendenden Gerät 10 aufbauen.

Alternativ kann das Gerät 10 auch die Initiative zum Verbindungsaufbau nach Empfang des Signals 14 ergreifen, falls das Signal 14 genügend Information enthält, um die Partnereinrichtung kommunikationstechnisch zu identifizieren.

Die Statusänderung des Gerätes 10 kann entweder, wie in Figur 2 dargestellt, unmittelbar nach dem fehlerfreien Empfang des Lasersignals 14 erfolgen oder aber erst nach Ende des Selektionsvorganges, d.h. erst nach erfolgreicher Überprüfung der Signale und nach Empfang des Identifikationssignals 25. Bei einem Abbruch der Verbindung über den ungerichteten Kommunikationskanal 34 oder bei einem Verbindungsabbau wird der Status wieder in den initialen Zustand zurückgesetzt.

Falls ein Gerät 10 irrtümlich ausgewählt wurde, erlaubt eine bevorzugte Ausführungsform der Erfindung eine Rücksetzung seines Status auf "das Gerät ist nicht ausgewählt" indem dem Gerät 10 erneut das gerichtete Signal übertragen wird. Alternativ dazu wird dieses Rücksetzen nach Massgabe einer Benutzereingabe an das Partnergerät über den ungerichteten Kommunikationskanal 34 oder nach Ablauf einer bestimmten Zeit ohne Aktivität ausgelöst.

Das optische Signal basiert auf einer gerichteten Signalübertragung, während das Identifikationssignal 25,25' auch ein omnidirektional wirkendes Signal sein kann, wie eine optische Anzeige 25 oder ein Funksignal 25' beispielsweise nach dem Bluetooth Standard.

Das optische Identifikationssignal 25 über die weitere Kommunikationsverbindung 24 wird vorzugsweise solange gesendet, wie die ungerichtete Kommunikationsverbindung 34 aktiv ist respektive solange wie der Status des Gerätes 10 "das Gerät ist ausgewählt" ist. Dies zeigt einem Benutzer dauernd an, mit welchem Gerät 10 kommuniziert wird, und erlaubt auch eine Kontrolle der oben beschriebenen Rücksetzung des Status.

Ein wesentlicher Vorteil des erfindungsgemäßen Verfahrens ist darin zu sehen, daß die notwendigen Vorbereitungsprozesse für den Aufbau einer Kommunikationsverbindung zu zumindest zwei stationären oder mobilen Geräten unter einer Vielzahl von Geräten schneller und sicherer ausführbar sind, selbst wenn die Geräte zum Zeitpunkt des Kommunikationserfordernisses nur sehr schwer zugänglich sind.

In der bevorzugten Ausführungsform ist der optische Empfänger 18 des Gerätes 10 mit einer Dispersions- bzw. Streu-Linse ausgestattet, um den Winkel für die zu empfangenden Signale zu erhöhen.

Jedes Gerät 10, 10₁, 10₂, 10₃,....ist mit einer Kommunikationseinrichtung 30 ausgestattet zur bidirektionalen, kabellosen Datenübertragung, z.B. von Radiofrequenz- oder Infrarotsignalen über den ungerichteten Kommunikationskanal 34.

Der erste Sender 16 ist hier durch einen Laserpointer 26 realisiert, der an der Partnereinrichtung 12 angeordnet ist. Es liegt jedoch ebenso im Rahmen der Erfindung, den Laserpointer 26 unabhängig und damit getrennt von der Partnereinrichtung 12 zu positionieren. Dann kann der Kommunikationsaufbau zwischen dem Gerät 10 und der Kommunikationseinrichtung 30 der Partnereinrichtung 12 von einem unabhängigen Bauteil, z.B. von einer kleinen, tragbaren Vorrichtung angesteuert, werden, die vom Personal bedient wird.

Neben dem Kommunikationsaufbau zwischen zwei mobilen Geräten liegt es ebenso im Rahmen der Erfindung einen Kommunikationsaufbau zu Personen, Tieren oder sich bewegenden Bauteilen auszuführen, die über die erfindungsgemäßen Empfänger und/oder Sender verfügen und darüber identifizierbar bzw. adressierbar sind. Dabei kann die Kommunikationseinrichtung 30 in der Partnereinrichtung 12 integriert oder als selbständiges Bauteil vorgesehen sein.

In einer weiteren Ausführungsform greift das erfindungsgemäße Verfahren auf eine Datenstruktur zu. Hier werden folgende Schritte ausgeführt:
- Anlegen einer Datenstruktur, in der zu jedem Identifikationssignal 25,25' gerätespezifische Daten abgelegt sind,
- Zugriff auf die Datenstruktur und
- Konfiguration und/oder Steuerung des Gerätes 10 in Abhängigkeit von den erfaßten Daten aus der Datenstruktur.

Eine Auswahleinrichtung 28 besteht aus dem, in Figur 3 dargestellten Laserpointer 26 und einem optischen Empfänger 18, der an dem Gerät 10 angeordnet ist und der den Laserstrahl 14 des Laserpointers 26 empfängt und besteht vorzugsweise weiterhin aus einem zweiten, am Gerät 10 befindlichen Sender 20, dessen Signale von einem zweiten, an der Partnereinrichtung angeordneten Empfänger 22 empfangen werden. Eine Kommunikationseinrichtung 30 ist vorzugsweise an der Partnereinrichtung 12 angeordnet, verarbeitet das Ergebnis der Auswahleinrichtung 28 und baut nach dem Empfang des Identifikationssignals 25,25' die Kommunikationsverbindung zu den ausgewählten Gerät 10 auf. Dabei basiert die Auswahleinrichtung 28 auf einem Protokoll zur gerichteten Signalübertragung, während die Kommunikationseinrichtung 30 auch auf einem anderen Protokoll aufsetzen kann. Die Kommunikationseinrichtung 30 kann dabei in Datenaustausch mit einer weiteren Kommunikationseinrichtung 32 stehen, die dem Gerät 10 zugeordnet ist.

In der bevorzugten Ausführungsform der Erfindung ist es wahlweise möglich durch den Auswahlvorgang nur jeweils ein Gerät 10 anzusprechen und auszuwählen oder eine Untergruppe aus der Gruppe von Geräten 10, die bestimmte Eigenschaften aufweisen. Dann wird zu all denjenigen Geräten 10 eine Kommunikationsverbindung aufgebaut, die auf das gerichtete Signal 14 ein Identifikationssignal 25,25' senden.

Ein erfindungsgemässes Gerät 10 ist also geeignet zur Herstellung einer selektiven Kommunikationsverbindung zwischen dem Gerät 10 und zumindest einer Partnereinrichtung 12, und weist auf:
- einem ersten Empfänger 18, der an dem Gerät 10 angeordnet ist und der zum Empfang eines gerichteten Signals 14 bestimmt ist,
- Mittel zum automatischen Andern eines Status des Gerätes 10 nach Massgabe des gerichteten Signals 14 und
- eine weitere Kommunikationseinrichtung 32, die zum Aufbau einer Kommunikationsverbindung über einen ungerichteten Kommunikationskanal 34 zwischen dem Gerät 10 und der Partnereinrichtung 12 in Abhängigkeit des Status des Geräts 10 vorgesehen ist.

Eine erfindungsgemässe Partnereinrichtung 12 ist geeignet zur Herstellung einer selektiven Kommunikationsverbindung zwischen der Partnereinrichtung 12 und zumindest einem Gerät 10, und weist auf:
- einen ersten Sender 16 zum Senden eines gerichteten Signals 14,
- Mittel 22;30 zum Empfang eines Identifikationssignals 25,25', zum Vergleich des Identifikationssignals 25,25' mit einem zweiten Identifikationsschlüssel auf Übereinstimmung, und
- eine Kommunikationseinrichtung 30, die zum Aufbau einer Kommunikationsverbindung über einen ungerichteten Kommunikationskanal 34 zwischen der Partnereinrichtung 12 und dem Gerät 10 in Abhängigkeit dieser Übereinstimmung vorgesehen ist.

Das Mittel 22;30 zum Empfang des Identifikationssignals 25,25' ist entsprechend den oben beschriebenen Ausführungsformen der Erfindung entweder die Kommunikationseinrichtung 30 oder aber der zweite Empfänger 22.

### Bezugszeichenliste

- 10: Gerät
- 10₁, 10₂, 10₃: weitere Geräte
- 12: Partnereinrichtung
- 14: Kommunikationsverbindung, Laserstrahl
- 16: erster Sender
- 18: erster Empfänger
- 20: zweiter Sender
- 22: zweiter Empfänger
- 24: weitere Kommunikationsverbindung
- 25,25': Identifikationssignal
- 26: Laserpointer
- 28: Auswahleinrichtung
- 30: Kommunikationseinrichtung
- 32: weitere Kommunikationseinrichtung
- 34: ungerichteter Kommunikationskanal

## Patentansprüche

1. Verfahren zur Herstellung einer selektiven Kommunikationsverbindung zwischen einem Gerät (10) und zumindest einer Partnereinrichtung (12), die durch einen ungerichteten Kommunikationskanal (34) verbindbar sind, in Abhängigkeit von einem Status des Gerätes (10), der anzeigt, ob ein Gerät (10) ausgewählt worden ist, mit nachstehenden Schritten:
- Auswahl des Gerätes (10) durch:
-- Senden eines gerichteten Signals (14) auf einen ersten Empfänger (18) des Gerätes (10)
-- Empfangen des gerichteten Signals (14) an dem Gerät (10) und
-- automatisches Ändern des Status des Gerätes (10)
- Kommunikationsaufbau zwischen dem statusveränderten Gerät (10) und der Partnereinrichtung (12).

2. Verfahren nach Anspruch 1,
**dadurch gekennzeichnet, daß**
das gerichtete Signal (14) so ausgebildet - insbesondere moduliert - ist, daß aufgrund des gerichteten Signals (14) eine Identifikation der Partnereinrichtung (12) möglich ist.

3. Verfahren nach einem der vorstehenden Ansprüche,
**dadurch gekennzeichnet, daß**
das gerichtete Signal (14) ein gerichtetes, optisches Signal, insbesondere ein Laserstrahl ist.

4. Verfahren nach einem der vorstehenden Ansprüche,
**dadurch gekennzeichnet, daß**
das Verfahren vor dem Kommunikationsaufbau noch folgenden Verfahrensschritt umfaßt:
nach Empfang des gerichteten Signals (14) sendet das Gerät (10) ein Identifikationssignal (25,25') an die Partnereinrichtung (12).

5. Verfahren nach einem der vorstehenden Ansprüche,
**dadurch gekennzeichnet, daß**
das Verfahren vor dem Kommunikationsaufbau noch folgenden Verfahrensschritt umfaßt:
- Überprüfung des Auswahlvorganges, indem das Identifikationssignal (25,25') mit einem zweiten Identifikationsschlüssel auf Übereinstimmung verglichen wird.

6. System zur Herstellung einer selektiven Kommunikationsverbindung zwischen einem Gerät (10) und zumindest einer Partnereinrichtung (12), mit:
- einer Auswahleinrichtung (28), die zumindest einen ersten Sender (16), der der Partnereinrichtung (12) zugeordnet ist, und einen ersten Empfänger (18) umfaßt, der an dem Gerät (10) angeordnet ist und der zum Empfang eines gerichteten Signals (14) des ersten Senders (16) bestimmt ist,
- Mittel zum automatischen Ändern eines Status des Gerätes (10) nach Massgabe des gerichteten Signals (14) und
- einer weiteren Kommunikationseinrichtung (32), die zum Aufbau einer Kommunikationsverbindung über einen ungerichteten Kommunikationskanal (34) zwischen dem mit der Auswahleinrichtung (28) ausgewählten Gerät (10) und der Partnereinrichtung (12) in Abhängigkeit des Status des Geräts (10) vorgesehen ist.

7. System nach Anspruch 6,
**dadurch gekennzeichnet, daß**
der erste Sender (16) zum Senden von gerichteten und/oder gerätespezifischen Signalen, insbesondere Lasersignalen, bestimmt ist.

8. System nach einem der Ansprüche 6 oder 7,
**dadurch gekennzeichnet, daß**
der erste Sender (16) und/oder der zweite Empfänger (22) an der Partnereinrichtung (12) angeordnet ist oder es möglich ist, ihn in eineindeutiger Weise der Partnereinrichtung (12) zuzuordnen.

9. System nach einem der Ansprüche 6 bis 8,
**dadurch gekennzeichnet, daß**
die Auswahleinrichtung (28) zumindest folgendes umfaßt:
einen zweiten Sender (20), der an dem Gerät (10) angeordnet ist und einen zweiten Empfänger (22), der zum Empfang der Signale des zweiten Senders (20) bestimmt ist.

10. System nach einem der Ansprüche 6 bis 9,
**dadurch gekennzeichnet, daß**
die Auswahleinrichtung (28) und die Kommunikationseinrichtung (30) auf unterschiedliche Übertragungsprotokolle zurückgreifen.

11. System nach einem der Ansprüche 6 bis 10
**dadurch gekennzeichnet, daß**
das Identifikationssignal (25,25') über die weitere Kommunikationseinrichtung (32) gesendet wird.

12. System nach einem der Ansprüche6 bis 11,
**dadurch gekennzeichnet, daß**
der erste Sender (16) ein Laserpointer (26) ist.

13. Gerät (10), geeignet zur Herstellung einer selektiven Kommunikationsverbindung zwischen dem Gerät (10) und zumindest einer Partnereinrichtung (12), mit:
- einem ersten Empfänger (18), der an dem Gerät (10) angeordnet ist und der zum Empfang eines gerichteten Signals (14) bestimmt ist,
- Mittel zum automatischen Andern eines Status des Gerätes (10) nach Massgabe des gerichteten Signals (14) und
- einer weiteren Kommunikationseinrichtung (32), die zum Aufbau einer Kommunikationsverbindung über einen ungerichteten Kommunikationskanal (34) zwischen dem Gerät (10) und der Partnereinrichtung (12) in Abhängigkeit des Status des Geräts (10) vorgesehen ist.

14. Partnereinrichtung (12), geeignet zur Herstellung einer selektiven Kommunikationsverbindung zwischen der Partnereinrichtung (12) und zumindest einem Gerät (10), mit:
- einem ersten Sender (16) zum Senden eines gerichteten Signals (14),
- Mitteln (22;30) zum Empfang eines Identifikationssignals (25,25'), zum Vergleich des Identifikationssignals (25,25') mit einem zweiten Identifikationsschlüssel auf Übereinstimmung, und
- einer Kommunikationseinrichtung (30), die zum Aufbau einer Kommunikationsverbindung über einen ungerichteten Kommunikationskanal (34) zwischen der Partnereinrichtung (12) und dem Gerät (10) in Abhängigkeit dieser Übereinstimmung vorgesehen ist.
